(19) Europäisches Patentamt
European Patent Office
Office européen des brevets

(11) **EP 2 226 372 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**03.01.2024 Patentblatt 2024/01**

(45) Hinweis auf die Patenterteilung:
**07.05.2014 Patentblatt 2014/19**

(21) Anmeldenummer: **10155470.7**

(22) Anmeldetag: **04.03.2010**

(51) Internationale Patentklassifikation (IPC):
**C09J 133/08** (2006.01)     **B41N 6/02** (2006.01)

(52) Gemeinsame Patentklassifikation (CPC):
**C09J 133/08; B41N 6/02**

(54) **Haftklebemassen zur Verklebung von Druckplatten**

Pressure-sensitive adhesive masses for bonding printing plates

Masses adhésives destinées au collage de plaques de pression

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.03.2009 DE 102009011482**

(43) Veröffentlichungstag der Anmeldung:
**08.09.2010 Patentblatt 2010/36**

(73) Patentinhaber: **tesa SE**
**22848 Norderstedt (DE)**

(72) Erfinder:
 • **Ellringmann, Kai, Dr.**
  **22589 Hamburg (DE)**
 • **Kupsky, Marco**
  **25451 Quickborn (DE)**

(74) Vertreter: **tesa SE**
**Hugo-Kirchberg-Straße 1**
**22848 Norderstedt (DE)**

(56) Entgegenhaltungen:
EP-A1- 1 262 502          EP-A1- 1 464 687
EP-A1- 2 116 584          WO-A1-2010/028976
CN-A- 101 033 377         JP-A- H10 338 845
JP-A- 2004 268 447        JP-A- 2005 232 330
US-A- 4 404 246           US-A- 4 751 269
US-A- 5 612 136           US-A- 5 623 011
US-A- 5 623 011           US-A1- 2002 098 347
US-A1- 2005 064 181       US-A1- 2005 263 243
US-A1- 2006 057 366       US-A1- 2008 044 611
US-A1- 2008 131 634

EP 2 226 372 B2

**Beschreibung**

Die Erfindung betrifft die Verwendung einer vernetzten Haftklebemasse auf Basis eines Polymers erhältlich durch Copolymerisation linearer und verzweigter Acrylsäureester sowie Acrylsäure zum Verkleben flexibler Druckplatten.

In der Druckindustrie sind unterschiedliche Verfahren bekannt, um Motive mittels druckender Vorlagen auf beispielsweise Papier zu übertragen. Eine Möglichkeit besteht im sogenannten Flexodruck.

Im Flexodruckverfahren werden flexible Druckplatten (auch als Klischees bezeichnet) auf Druckzylinder oder Druckhülsen verklebt. Derartige Klischees bestehen beispielsweise aus einer Polyethylenterephthalat-Folie (PET-Folie), auf die eine Schicht eines Fotopolymers aufgebracht ist, in die durch Belichtung das entsprechende Druckrelief eingebracht werden kann. Die Verklebung des Klischees auf dem Druckzylinder bzw. der Druckhülse erfolgt dann über die PET- Folie.

Zur Verklebung werden in der Regel doppelseitige Haftklebebänder eingesetzt, an die sehr hohe Anforderungen gestellt werden. Für den Druckprozess muss das Haftklebeband eine bestimmte Härte, aber auch eine bestimmte Elastizität aufweisen. Diese Eigenschaften müssen sehr genau eingestellt werden, damit das erzeugte Druckbild gemäß den Anforderungen das gewünschte Ergebnis liefert. Hohe Anforderungen werden ebenfalls an die Haftklebemasse gestellt, da die Klebkraft ebenfalls ausreichend sein sollte, damit sich die Druckplatte nicht von dem doppelseitigen Haftklebeband oder das Haftklebeband vom Zylinder bzw. der Hülse ablöst. Dies gilt auch bei erhöhten Temperaturen von 40 bis 60 °C und bei höheren Druckgeschwindigkeiten. Neben dieser Eigenschaft muss die Haftklebemasse aber auch reversible Hafteigenschaften besitzen, um die Druckplatten nach den Druckvorgängen wieder ablösen zu können (dabei muss sowohl die Klebeverbindung des Haftklebebandes zum Druckzylinder bzw. zur Druckhülse als auch die zum Klischee rückstandsfrei zu lösen sein, um eine Wiederverwendbarkeit beider Komponenten zu gewährleisten). Diese Ablösbarkeit sollte auch nach einer Verklebung über einen längeren Zeitraum (bis zu 6 Monate) gegeben sein. Zudem ist es erwünscht, dass sich das Haftklebeband und insbesondere die Druckplatte ohne Zerstörung dieser, d. h. ohne großen Kraftaufwand wieder entfernen lässt, da die Druckplatten in der Regel mehrfach eingesetzt werden. Zudem sollten keine Rückstände auf der Druckplatte und auf dem Zylinder bzw. der Hülse verbleiben. Zusammenfassend werden somit sehr hohe Anforderungen an die für diesen Einsatz geeigneten doppelseitigen Haftklebebänder gestellt.

Als Haftklebemassen kommen beispielsweise solche auf Naturkautschukbasis in Frage, wie etwa die EP 760 389 A dokumentiert. Für den genannten Einsatzzweck werden aber auch Haftklebebänder eingesetzt, die Haftklebemassen auf Polyacrylatbasis aufweisen. So beschreibt beispielsweise die WO 03/057497 A eine Acrylathaftklebemasse auf Blockcopolymerbasis für den genannten Anwendungszweck. Die WO 2004/067661 A offenbart ein Haftklebeband mit einer Haftklebemasse auf Basis eines weichen Acrylmonomers ($T_G < - 30$ °C) zu mindestens 49,5 Gew.-%, zumindest eines harten, zyklischen oder linearen (Meth)Acrylsäureester-Monomers ($T_G \geq 30$ °C) zu mindestens 10 Gew.-% sowie funktionalisierter harter (Meth)Acrylsäure/-ester-Monomere ($T_G \geq 30$ °C) zu mindestens 0,5 Gew.-%, wobei die Haftklebemasse in einem zweistufigen Verfahren hergestellt wird. Es ist angegeben, dass die letzte der genannten Komponenten, die unter anderem Acrylsäure umfasst, bis zu Anteilen von 10 Gew.-% vorhanden sein kann. Es wird jedoch nicht gelehrt, wie diese Komponente, wenn sie als Acrylsäure gewählt wird, unter Erhalt der erforderlichen Haftklebeeigenschaften in entsprechend hohen Anteilen einpolymerisiert werden könnte bzw. in wieweit hohe Acrylsäureanteile einen Einfluss auf die haftklebrigen Eigenschaften hätten. Dementsprechend zeigen alle angegebenen Beispiele einen Acrylsäureanteil von nur 2 Gew.-% in der Haftklebemasse, entsprechend den Erwartungen des Einflusses harter Monomere bezüglich der geforderten Anwendungseigenschaften (siehe hierzu weiter unten). Auf eine Lösungsmittelbeständigkeit der resultierenden Massen wird nicht eingegangen.

Auch die Schrift EP 2 116 584 A1, offenbart Haftklebemassen auf Acrylatbasis enthaltend Acrylsäure als Comonomere zur Verklebung von Druckplatten. Es sind keine vernetzten Haftklebemassen offenbart, deren Basispolymerkomponente einen Acrylsäuregehalt von mindestens 8 Gew.-% enthält.

Mit den aus dem Stand der Technik bekannten Haftklebemassen ist jedoch ein Problem verbunden. Sie eignen sich zwar sehr gut für eine im Betrieb sichere Verklebung der Druckklischees auf Druckzylindern und auf Druckhülsen und sind nachher gut wieder ablösbar, in Kontakt mit Lösungsmitteln, die in die Klebfuge eindringen können, kommt es jedoch zu einem Versagen der Klebeverbindung. Dies ist insbesondere der Fall, wenn die verklebten Druckklischees von der Druckerfarbe gereinigt werden sollen. Dies wird üblicherweise dadurch bewirkt, indem man die Lösungsmittel, die auch als Lösungsmittel für die Farben an sich dienen, in großer Menge zum Abwaschen und Ablösen der Farben von den Klischees einsetzt. Dabei kommt es aber unweigerlich zu einem Unterkriechen der Ränder der Verklebung des Klischees auf dem Haftklebeband. Hierbei kommt es zu einem Ablösen der Klischees, da die Klebmassen des Haftklebebandes die notwendige Haftung auf dem Klischee verlieren. Die hierdurch entstehenden Fahnen verhindern weitere Druckvorgänge dadurch, dass sie die Druckfarbe verschmieren, sofern es nicht sogar zu mechanischen Problemen mit den Klischeefahnen in der Druckapparatur und somit zu Systemausfällen kommt. In der Praxis müssen deshalb Druckklischees, die mit Klebmassen nach dem Stand der Technik montiert wurden, durch Versiegelung der Klischeeränder mit einseitig klebenden Haftklebebändern oder mit Flüssig- oder Schmelzklebern gegen das Lösungsmittel geschützt werden.

Dieser zusätzliche Versiegelungsprozess bedeutet einen deutlichen Mehraufwand und es besteht die Gefahr, die teuren Druckklischees insbesondere bei Verwendung von Flüssig- oder Schmelzklebern bei der Demontage zu beschädigen.

Weitere Haftklebemasse auf Acrylatbasis mit Acrylsäure als Comonomer sind in den Schriften WO 2010/028976, US 623 011 A, JP 2004 268447 A und JP 2005 232330 gezeigt. Aber auch diese Schriften zeigen keine Haftklebemassen, deren Acrylsäuregehalt im Bereich von 8 Gew.-% oder höher läge. Keine dieser Schriften leistet einen Beitrag zu der Erkenntnis, wie für vernetzte Haftklebemassen eine erhöhte Lösemittelbeständigkeit erzielt werden könnte. Die Anwendung der Druckplattenverklebung ist in diesen Schriften nicht erwähnt.

Daher erscheint es erforderlich eine Haftklebemasse zu entwickeln, die die im Stand der Technik beschriebenen Nachteile nicht aufweist und in der beschriebenen Anwendung ohne eine zusätzliche Versiegelung der Klischeeränder auskommt.

Aufgabe der Erfindung ist es, eine Haftklebemasse anzubieten, die auch unter dem Einfluss von Lösungsmitteln eine gute und sichere Verklebung insbesondere auf PET (Polyethylenterephthalat) gewährleistet, sich aber dennoch auch nach längerer Zeit wieder ablösen lässt. Die Haftklebemasse sollte bevorzugt insbesondere für das Verkleben von Druckklischees geeignet sein, wobei die Druckklischees bei dem Einfluss von Lösungsmitteln keine oder eine deutlich verminderte Tendenz zum Kantenabheben aufweisen sollen.

Überraschend gelöst werden konnte diese Aufgabe durch die Verwendung einer Haftklebemasse zum Verkleben flexibler Druckplatten, die einen Acrylsäureanteil von 8 bis 15 Gew.% aufweist sowie ein bestimmtes Verhältnis einpolymerisierter linearer Acrylsäureester zu verzweigten nichtcyclischen Acrylsäureestern aufweist.

Haftklebemassen (PSA; englisch: "pressure sensitive adhesives") sind insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (einen so genannten "Tack" [Klebrigkeit oder Anfassklebrigkeit] aufweisen). Sie sind in der Lage, bereits bei der Anwendungstemperatur ohne eine Aktivierung durch Lösungsmittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur $T_G$ unterhalb der Anwendungstemperatur (also üblicherweise unterhalb der Raumtemperatur) aufweisen [die Bestimmung der Glasübergangstemperatur erfolgt dabei üblicherweise unter quasistationären Bedingungen, vorteilhaft mittels Dynamischer Differenzkalorimetrie DDK (engl. Differential Scanning Calometry DSC); DIN 53765. Sofern nicht anders angegeben, beziehen sich die Glasübergangstemperaturen in dieser Schrift auf die Messung nach DIN 53765).

Unterhalb der Glasübergangstemperatur $T_G$ verhalten sich Haftklebemassen sprödelastisch (glasartig-amorph bzw. teilkristallin); hier kann kein haftklebriges Verhalten ausgebildet werden. Oberhalb der Glasübergangstemperatur $T_G$ erweichen die Massen mit zunehmender Temperatur je nach Zusammensetzung mehr oder weniger stark und nehmen in einem bestimmten Temperaturbereich die für die haftklebrigen Eigenschaften geeigneten Viskositätswerte an, bevor sie bei noch höheren Temperaturen zu dünnflüssig werden, um noch haftklebrige Eigenschaften zu besitzen (es sei denn, sie zersetzen sich vorher).

Ein weiteres Kriterium für die Eignung als Haftklebemasse ist die Kohäsion. Die Polymermasse muss eine hinreichende Kohäsion aufweisen, um bei der Verklebung die Haftung vermitteln zu können und nicht aus der Klebefügung zu fließen. Durch geeignete kohäsionssteigernde Maßnahmen, wie beispielsweise Vernetzungreaktionen (Ausbildung brückenbildender Verknüpfungen zwischen den Makromolekülen), kann der Temperaturbereich, in dem eine Polymermasse haftklebrige Eigenschaften aufweist, eingestellt, vergrößert und/oder verschoben werden. Der Anwendungsbereich der Haftklebemassen kann somit durch eine Einstellung zwischen Fließfähigkeit und Kohäsion der Masse optimiert werden.

Acrylsäure ist ein "hartes" Comonomer, je höher der Anteil an Acrylsäure in der Masse ist, desto höher wird die erwartete Glasübergangstemperatur des Copolymers sein. Dies hat einen starken Einfluss auf die Eignung des Copolymers als Basispolymer für Haftklebemassen und insbesondere auf das Montageverhalten der Haftklebemassen. Als Montageverhalten wird im Sinne dieser Schrift insbesondere die Soforthaftung bei dem Verkleben eines Klebebandes mittels der betreffenden Haftklebeschicht auf einem Untergrund verstanden, für ein gutes Montageverhalten soll ein kurzzeitiges Andrücken mit geringer Kraft also demgemäß zu einer guten und verlässlichen Haftung führen. Durch die Copolymerisation sehr hoher Mengen an Acrylsäure kommt man leicht in den Bereich so hoher Glasübergangstemperaturen des Copolymeren, dass diese zu nahe an die Anwendungstemperatur (insbesondere also Raumtemperatur) kommen oder diese sogar überschreiten, so dass der Einsatz als Basispolymer für Haftklebemassen nicht mehr möglich ist.

Man versucht diesen Effekt zu kompensieren, indem als weitere Comonomere weiche Monomere eingesetzt werden, also solche Monomere, deren Glasübergangstemperaturen niedrig liegen, um die Glasübergangstemperatur des Copolymeren wieder nach unten zu drücken.

Für die Berechnung der Glasübergangstemperaturen von Comonomeren wird im Stand der Technik die Fox-Gleichung (G1) (vgl. T.G. Fox, Bull. Am. Phys. Soc. 1 (1956) 123) als anwendbar beschrieben:

$$\frac{1}{T_G} = \sum_n \frac{w_n}{T_{G,n}} \qquad (G1)$$

In der Gleichung (G1) repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K. Diese besagt, dass die Glasübergangstemperatur sich direkt mit dem Massenanteil der jeweils eingesetzten Comonomere verändert. Der Fachmann würde hiernach also erwarten, dass man die Glasübergangstemperatur dadurch am weitesten senken kann, dass man zu der Acrylsäure lediglich diejenige Monomersorte copolymerisiert, deren entsprechendes Homopolymere die niedrigsten Glasübergangstemperatur aufweist, und damit das Copolymer mit den besten Montageverhalten erhält. Als gutes Montageverhalten im Sinne dieser Schrift wird eine gute Soforthaftung bei der Montage des Klischees auf dem Klebeband verstanden (wobei das doppelseitige Klebeband mit seiner anderen Klebeoberfläche auch einem Druckzylinder oder einer Druckhülse, also einer gebogenen Oberfläche, verklebt wird), ein kurzzeitiges Andrücken mit geringer Kraft soll demgemäß also zu einer guten Haftung des Klischees auf dem Klebeband führen.

Überraschenderweise wurde gefunden, dass der vorhergesagte Effekt die Realität nicht zufrieden stellend beschreibt. Es konnte festgestellt werden, dass ein Copolymer mit einer hohen Menge an Acrylsäure das beste Montageverhalten aufweist, wenn als weitere Comonomere mindestens ein linearer "weicher" Acrylester und mindestens ein verzweigter "weicher" Acrylester zu nicht unwesentlichen Masseanteilen vorhanden sind.

Durch die Erhöhung des Acrylsäureanteils in Polymersystemen mit dennoch hervorragenden Montageeigenschaften ist es gelungen, ein Haftklebemassensystem anzubieten, welches eine hervorragende Verklebung von Druckklischees auf Druckzylindern und auf -hülsen bewirkt, auch unter dem Einfluss von höheren Mengen Lösungsmitteln keine oder eine nur sehr geringe Neigung zum Kantenabheben zeigt und dennoch hervorragend wieder ablösbar ist, so dass die Haftklebemassenschicht (üblicherweise als Schicht eines zum Verkleben eingesetzten Klebebandes) vom Druckklischee auch nach längerer Verklebungsdauer entfernt werden kann, ohne dass auf den verklebten Untergründen Haftklebemassenrückstände verbleiben.

Die Erfindung betrifft die Verwendung einer vernetzten Haftklebemasse, die eine oder mehrere Basispolymerkomponenten umfasst, wobei die Basiskomponente(n) durch radikalische Copolymerisation folgender Monomere erhältlich ist:

a) lineare Acrylsäureester mit 2 bis 10 C-Atomen im Alkylrest,
b) verzweigte nichtzyklische Acrylsäureester mit einer Glasübergangstemperatur $T_G$ (bezogen auf die DSC-Messung nach DIN 53765) von nicht mehr als - 20 °C,
c) 8 bis 15 Gew.-% Acrylsäure,
d) weniger als 10 Gew.-% weiterer copolymerisierbarer Monomere.

Erfindungsgemäß liegt das Verhältnis der linearen Acrylsäureester zu den verzweigten Acrylsäureestern im Bereich von 1 : 6 bis 10 : 1 Masseanteilen.

In einer besonders bevorzugten Ausgestaltung der Erfindung umfasst die Haftklebemasse nur eine Basispolymerkomponente, insbesondere vorteilhaft beschränkt sich die Basispolymerkomponente auf die Komponenten a) bis c), so dass der Basispolymerkomponente keine weiteren copolymerisierbaren Monomere außer linearen Acrylsäureestern mit 2 bis 10 C-Atomen im Alkylrest, verzweigte nichtzyklische Acrylsäureester mit einer Glasübergangstemperatur TG von nicht mehr als - 20 °C und Acrylsäure in den vorstehend genannten Gewichtsanteilen zugrunde liegen.

Die erfindungsgemäße Haftklebemasse zeichnet sich dadurch aus, dass auf die Anwesenheit anderer - insbesondere weich machender - Comonomere und Komponenten als den genannten verzichtet werden kann. So kann beispielsweise vollständig auf Comonomere mit zyklischen Kohlenwasserstoffbausteinen verzichtet werden.

Lineare Alkylsäureester mit 2 bis 10 C-Atomen im Alkylrest sind Ethylacrylat, n-Propylacrylat, n-Butylacrylat, n-Pentylacrylat, n-Hexylacrylat, n-Heptylacrylat, n-Octylacrylat, n-Nonylacrylat, n-Decylacrylat.

Verzweigte nichtzyklische Acrylsäureester mit einer Glasübergangstemperatur $T_G$ (bezogen auf die DSC-Messung nach DIN 53765) von nicht mehr als - 20°C sind solche Acrylsäureester, deren Homopolymere eine Glasübergangstemperatur $T_G$ von nicht mehr als - 20°C aufweisen. Bevorzugt werden als solche verzweigte nichtzyklische Acrylsäureester C4-C12-Alkylester der Acrylsäure eingesetzt, die bevorzugt ausgewählt werden aus der Gruppe bestehend aus 2-Ethylhexylacrylat (EHA), 2-Propylheptylacrylat, Isooctylacrylat, iso-Butylacrylat, iso-Amylacrylat und/oder iso-Decylacrylat. Erfindungsgemäß besonders vorteilhaft hat sich gezeigt, wenn als verzweigte nichtzyklische Acrylsäureester 2-Ethylhexylacrylat (EHA), 2-Propylheptylacrylat und/oder Isooctylacrylat (genauer: die Acrylsäureester, bei denen die Alkoholkomponente auf ein Gemisch primärer Isooctanole zurückzuführen ist, also auf solche Alkohole, die aus einem Isohepten-Gemisch durch Hydroformylierung u. anschließende Hydrierung gewonnen werden können) eingesetzt werden.

Sehr bevorzugt ist eine Haftklebemasse, deren Basispolymer auf genau einem Monomer der Sorte a), einem Monomer der Sorte b) und Acrylsäure beruht, wobei besonders bevorzugt als Monomer der Sorte a) Butylacrylat und als Monomer der Sorte b) 2-Ethylhexylacrylat gewählt wird.

Mit dem Anteil an Acrylsäure in der Basispolymerkomponente lässt sich die Eignung im gewünschten Anwendungsbereich hervorragend einstellen. Mit zunehmendem Acrylsäureanteil singt die Qualität im Montageverhalten bei niedrigen Temperaturen (Temperaturen unterhalb der Raumtemperatur), steigt aber die Qualität bezüglich des Kantenabhebens unter Lösungsmitteleinf luss s (im folgenden als Lösungsmittelbeständigkeit definiert; quantifizierbar mittels Testmethode 2: Lösungsmittelbeständigkeit).

Ein Acrylsäureanteil von 8 bis 10 Gew.-%, bevorzugt von mindestens 9 Gew.-% zeigt bei niedrigen Temperaturen (Temperaturen unterhalb der Raumtemperatur, hier beispielhaft 15 °C) noch ein sehr gutes Montageverhalten und bereits eine befriedigende Lösungsmittelbeständigkeit. Erhöht man bei gleich bleibendem Verhältnis von linearem Acrylsäureester (beispielhaft Butylacrylat) zu verzweigtem nichtzyklischem Acrylsäureester (beispielhaft 2-Ethylhexylacrylat) den Acrylsäure-Anteil auf mindestens 10 %, so lässt sich das Kantenabhebeverhalten noch verbessern, während allerdings das Montageverhalten bei niedrigen Temperaturen nachlässt, aber bei Temperaturen um Raumtemperatur und darüber noch hervorragend bleibt. So ist beispielsweise bei 11 Gew.-% Acrylsäure noch ein befriedigendes Montageverhalten bei erniedrigten Temperaturen (beispielsweise 15 °C) und bereits eine gute Lösungsmittelbeständigkeit festzustellen. Legt man auf das Montageverhalten bei niedrigen Temperaturen weniger Wert, so lässt sich durch weitere Erhöhung des Acrylsäureanteils, etwa auf 12 Gew.-% (noch hinreichendes Montageverhalten bei niedrigen Temperaturen) oder auf 13 Gew.-% (insbesondere für Montage bei erhöhten Temperaturen) eine hervorragende Lösungsmittelbeständigkeit feststellen.

Als optional bis zu 10 Gew.-% eingesetzte weitere copolymerisierbare Monomere können ohne besondere Einschränkung alle dem Fachmann bekannten radikalisch polymerisierbaren C=C-Doppelbindungs-haltigen Monomere oder Monomergemische verwendet werden. Beispielhaft genannte Monomere hierfür sind:

Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, a- und p-Methylstyrol, a-Butylstyrol, 4-n-Butylstyrol, 4-n-Decylstyrol, 3,4-Dimethoxystyrol. Makromonomere wie 2-Polystyrolethylmethacrylat (Molekulargewicht MW von 4000 bis 13000 g/mol),
Poly(Methylmethacrylat)ethylmethacrylat (MW von 2000 bis 8000 g/mol).

Die beispielhaft genannten Monomere können vorteilhaft auch derart gewählt werden, dass sie funktionelle Gruppen enthalten, die eine nachfolgende strahlenchemische Vernetzung (beispielsweise durch Elektronenstrahlen, UV) unterstützen.

Weiterhin hat sich bei der Variation des Verhältnisses von linearem Acrylsäureester zu verzweigten nichtzyklischen Acrylsäureester gezeigt, dass ein Minderanteil sowohl an linearer Acrylsäureesterkomponente oder an verzweigter Acrylsäureesterkomponente inakzeptabel ist, da das Montageverhalten bei niedrigen Temperaturen nicht befriedigend ist und selbst bei Raumtemperatur keine guten Werte annimmt.

Erfindungsgemäß liegt das Verhältnis der linearen Acrylsäureester zu den verzweigten Acrylsäureestern im Bereich von 1 : 5 bis 9 : 1, bevorzugt im Bereich von 1 : 3 bis 5 : 1 insbesondere im Bereich von 1 : 2 bis 4 : 1 Masseanteilen, um ein hinreichend gutes Montageverhalten bei Raumtemperatur oder höher zu gewährleisten.

Besonders bevorzugt wählt man das Verhältnis der linearen Acrylsäureester zu den verzweigten Acrylsäureestern im Bereich von 1,5 : 1 bis 3,5 : 1, insbesondere bei 2 : 1 bis 3 : 1 Masseanteilen, da sich hier das beste Montageverhalten auch noch bei niedrigen Temperaturen (beispielsweise 15 °C) zeigt. Derartige Haftklebemassen sind also auch noch hervorragend im Tieftemperaturbereich einsetzbar.

Die vorstehenden Ausführungen (Acrylsäureanteil, Verhältnis der Komponenten zueinander) gelten grundsätzlich auch für die übrigen als erfindungsgemäß vorteilhaft angegebenen linearen Acrylsäureester und verzweigten nichtzyklischen Acrylsäureester.

In einer vorteilhaften Ausführungsform der erfindungsgemäßen Haftklebemasse macht die Basispolymerkomponente mindestens 90 Gew.-%, bevorzugt mindestens 95 Gew.-%, besonders bevorzugt mindestens 98 Gew.-% der Haftklebemasse aus, beziehungsweise machen die Basispolymerkomponenten in Summe mindestens 90 Gew.-%, bevorzugt mindestens 95 Gew.-%, besonders bevorzugt mindestens 98 Gew.-% der Haftklebemasse aus, sofern mehr als ein Basispolymer vorhanden ist. In einer besonders vorteilhaften Ausführungsform besteht die Haftklebemasse ausschließlich aus der vernetzten Basispolymerkomponente bzw. aus den vernetzten Basispolymerkomponenten.

Durch die Vernetzung der Haftklebemasse wird ein kohäsives Versagen bei der Anwendung vermieden, also ein Aufbrechen innerhalb der Klebemassenschicht als solcher. Die Vernetzung kann dabei nach den dem Fachmann an sich geläufigen Verfahren geschehen.

Durch den hohen Acrylsäureanteil weist die Haftklebemasse einen hohen Anteil polarer Gruppen auf. Insbesondere auf polaren Oberflächen wie beispielsweise Polyethylenterephthalat ist daher aufgrund polar-polarer Wechselwirkungen ein Aufziehen der Haftklebemasse mit der Zeit zu erwarten, was normalerweise zu einer Verfestigung der Bindung auf dem Substrat und somit zu einer erschwerten Wiederablösbarkeit führen würde. Überraschender Weise wurde aber festgestellt, dass sich die Haftklebemasse auch nach längeren Verklebungszeiten einfach und rückstandsfrei wieder vom Klischee lösen lässt, so dass auch diese Anforderung durch die erfindungsgemäße Haftklebemasse einwandfrei erfüllt wird.

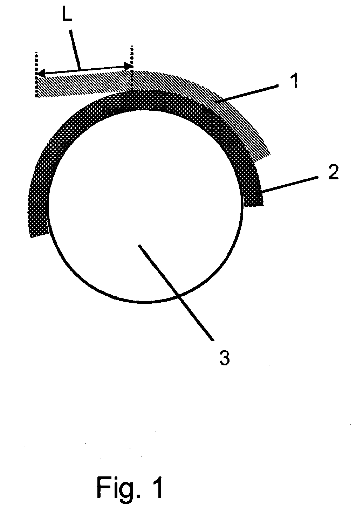

Die Verwendung der Haftklebemassen kann in der Form doppelseitiger Klebebänder mit zwei außenliegenden Haftklebemassenschichten erfolgen, von denen zumindest diejenige, die zur Verklebung des Druckklischees dient, durch eine wie oben beschriebene Haftklebemasse realisiert ist. Der Aufbau des Klebebandes kann ansonsten denjenigen des Standes der Technik entsprechen, etwa der Art, wie sie in der WO 2004/067661 A in Figur 1 wiedergegeben ist (siehe dort auch die dazugehörige Beschreibung ab Seite 16, Zeile 35 ff). Aber auch die sonstigen Klebebanddesigns, wie sie aus dem Stand der Technik insbesondere für die Verklebung von Druckklischees auf Druckzylindern oder -hülsen bekannt sind, können realisiert werden.

Anhand von experimentellen Untersuchungen sollen die Vorteile der erfindungsgemäßen Haftklebemassen im Folgenden dargelegt werden, ohne durch die Wahl der dargestellten Experimente eine unnötige Beschränkung des Erfindungsgegenstandes vornehmen zu wollen.

Prüfmusterherstellung:

Beispiel 1

Ein für radikalische Polymerisationen konventioneller 2 L-Glasreaktor wurde mit 20,0 g Acrylsäure, 99,2 g 2-Ethylhexylacrylat, 280,8 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DüPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.

Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 2

Ein für radikalische Polymerisationen konventioneller 2 L-Glasreaktor wurde mit 28,0 g Acrylsäure, 97,2 g 2-Ethylhexylacrylat, 274,8 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyclohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.

Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 3

Ein für radikalische Polymerisationen konventioneller 2 L-Glasreaktor wurde mit 36,0 g Acrylsäure, 95,2 g 2-Ethylhexylacrylat, 268,8 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.

Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 4

Ein für radikalische Polymerisationen konventioneller 2 L-Glasreaktor wurde mit 44,0 g Acrylsäure, 93,2 g 2-Ethylhexylacrylat, 254,8 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben.

Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.

Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 5

Ein für radikalische Polymerisationen konventioneller 2 L-Glasreaktor wurde mit 48,0 g Acrylsäure, 92,0 g 2-Ethylhexylacrylat, 260,0 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.

Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 6

Ein für radikalische Polymerisationen konventioneller 2 L-Glasreaktor wurde mit 52,0 g Acrylsäure, 90,8 g 2-Ethylhexylacrylat, 257,2 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.

Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 7

Ein für radikalische Polymerisationen konventioneller 2 L-Glasreaktor wurde mit 48,0 g Acrylsäure, 352,0 g 2-Ethylhexylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.

Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 8

Ein für radikalische Polymerisationen konventioneller 2 L-Glasreaktor wurde mit 48,0 g Acrylsäure, 292,0 g 2-Ethylhexylacrylat, 60,0 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.

Anschließend wurde das Polymerisat mit einer 1:1 Mischung aus Aceton und Siedegrenzenbenzin 60/95 auf einen Feststoffgehalt von 30 % verdünnt und mit 1g Aluminium(III)acetylacetonat abgemischt. Die Eigenschaften der so erhaltenen Haftklebemasse wurden anhand eines doppelseitigen Haftklebeverbundes bewertet.

Beispiel 9

Ein für radikalische Polymerisationen konventioneller 2 L-Glasreaktor wurde mit 48,0 g Acrylsäure, 236,0 g 2-Ethylhexylacrylat, 116,0 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.

Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 10

Ein für radikalische Polymerisationen konventioneller 2 L-Glasreaktor wurde mit 48,0 g Acrylsäure, 172,0 g, 2-Ethylhexylacrylat, 180,0 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.

Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 11

Ein für radikalische Polymerisationen konventioneller 2 L-Glasreaktor wurde mit 48,0 g Acrylsäure, 112,0 g 2-Ethylhexylacrylat, 240,0 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45.g Aceton und 45 g Siedegrenzenbenzin 60/95 verdünnt. Die Reaktion wurde nach 24 h Reaktionszeit abgebrochen und auf Raumtemperatur abgekühlt.
Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 12

Ein für radikalische Polymerisationen konventioneller 2 L-Glasreaktor wurde mit 48,0 g Acrylsäure, 72,0 g 2-Ethylhexylacrylat, 280,0 g Butylacrylat, 150,0 g-Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.
Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 13

Ein für radikalische Polymerisationen konventioneller 2 L-Glasreaktor wurde mit 48,0 g Acrylsäure, 32,0 g 2-Ethylhexylacrylat, 320,0 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.
Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Beispiel 14

Ein für radikalische Polymerisationen konventioneller 2 L-Glasreaktor wurde mit 48,0 g Acrylsäure, 352,0 g Butylacrylat, 150,0 g Aceton und 150,0 g Siedegrenzenbenzin 60/95 befüllt. Nach 45 Minuten Durchleiten von Stickstoffgas unter Rühren wurde der Reaktor auf 58 °C hochgeheizt und es wurden 0,16 g 2,2'-Azodi(2-methylbutyronitril) (Vazo® 67, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurden 0,24 g 2,2'-Azodi(2-methylbutyronitril) (Vazo® 67, Fa. DuPont) gelöst in 10 g Aceton hinzugegeben. Nach 3 Stunden wurde mit 45 g Aceton und 45 g Siedegrenzenbenzin 60/95 verdünnt. Nach 5 Stunden und 30 Minuten Reaktionszeit wurden 0,60 g Bis-(4-tert-Butylcyclohexanyl)-Peroxydicarbonat (Perkadox® 16, Fa Akzo Nobel) gelöst in 10 g Aceton hinzugegeben. Nach 7 Stunden Reaktionszeit wurden 0,60 g Bis-(4-tert.-Butylcyciohexanyl) Peroxydicarbonat (Perkadox® 16, Fa Akzo Nobel) gelöst in 10 g Aceton hinzugegeben. Nach 10 Stunden Reaktionszeit wurde mit 45 g Aceton und 45 g Siedegrenzenbenzin 60/95 verdünnt. Die Reaktion wurde nach 24 h Reaktionszeit abgebrochen und auf Raumtemperatur abgekühlt.

Anschließend wurde das Polymerisat mit einer 1:1 Mischung aus Aceton und Siedegrenzenbenzin 60/95 auf einen Feststoffgehalt von 30 % verdünnt und mit 1 g Aluminium(III)acetylacetonat abgemischt. Die Eigenschaften der so erhaltenen Haftklebemasse wurden anhand eines doppelseitigen Haftklebeverbundes bewertet.

Vergleichsbeispiel R 1: Synthesekautschuk-Haftklebemasse

20 Gewichtsteile Kraton® D 1118 (Styrol/Butadien/Styrol-Triblockcopolymer, ca. 76 Gew.-% Zweiblock, Blockpolystyrolgehalt: 31 Gew.-%, Kraton Polymers), 40 Gewichtsteile Kraton® D 1101 (Styrol/Butadien/Styrol-Triblockcopolymer, ca. 18 Gew.-% Zweiblock, Blockpolystyrol-gehalt: 31 Gew.-%, Kraton Polymers), 30 Gewichtsteile Dercolyte® A 115 (Alpha-Pinenharz, Erweichungstemperatur: ca. 115 °C, DRT) und 10 Gewichtsteile Wingtack® 10 (flüssiges Kohlenwasserstoffharz, Goodyear) wurden in einer Mischung aus Toluol und Benzin 50:50 gelöst, so dass ein Feststoffgehalt von 40 % entsteht. Als Alterungsschutzmittel wurden 0,5 Teile Irganox® 1010 (sterisch gehindertes Phenol; Ciba Additive) und 0,5 Teile Tinuvin® P (kommerzieller UV-Absorber, Ciba Additive) als UV-Absorber zugesetzt. Die Eigenschaften der so erhaltenen Haftklebemasse wurden anhand eines doppelseitigen Haftklebeverbundes bewertet.

Vergleichsbeispiel R2: Haftklebemasse entsprechend Beispiel 1 aus WO 2004/067661 A

Ein für radikalische Polymerisationen konventioneller 2 L-Glasreaktor wurde mit 8 g Acrylsäure, 272 g 2-Ethylhexylacrylat, 120 g Isobornylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo® 64™, Fa. DuPont) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox® 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox® 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3 %ige Lösung Aceton) abgemischt und - auf einen Feststoffgehalt von 30 % mit Siedegrenzenbenzin 60/95 verdünnt. Die Eigenschaften der so erhaltenen Haftklebemasse wurden anhand eines doppelseitigen Haftklebeverbundes bewertet.

**Herstellung des doppelseitigen Haftklebebandverbundes:**

Zunächst erfolgte die Beschichtung der Haftklebemasse aus den Beispielen 1-14, R 1 und R 2 aus Lösung auf eine mittels Trichloressigsäure beidseitig geätzte 23 μm dicke PET-Folie. Nach Trocknung für 15 Minuten bei 120 °C betrug der Massesauftrag 50 g/m2. Masseseitig wurde die beschichtete Folie mit einer beidseitig silikonisierten PET-Folie (Abdeckmaterial) kaschiert. Anschließend wurde über einen Transferträger eine handelsübliche Acrylatmasse mit einem Masseauftrag von 20 g/m2 auf die unbeschichtete Seite der geätzten PET-Folie des Verbundes laminiert und ein PE-EVA-Schaum mit einer Dicke von 500 μm und einem Raumgewicht von 270 kg/m$^3$ zukaschiert.

Auf diesen Schaumträger wurde dann über einen Transferträger eine handelsübliche Acrylathaftklebemasse mit einem Masseauftrag von 50 g/m$^2$ auf die unbeschichtete Seite des vorherigen Verbundes auflaminiert (offenliegende Acrylathaftklebeschicht).

**Testmethode 1: Montageverhalten**

Aus dem zu untersuchenden doppelseitigen Haftklebeverbund wurden 250 mm x 160 mm große Muster geschnitten. Diese Muster wurden mit der handelsüblichen, offen liegenden Acrylathaftklebeschicht auf einen Stahlzylinder mit einem Durchmesser von 110 mm so geklebt, dass die kürzeren Kanten der Muster in Längsrichtung des Zylinders ausgerichtet waren. Dann wurde das Abdeckmaterial abgezogen, so dass die Schicht der erfindungsgemäßen Haftklebemasse nun offenlag. Auf die so verklebten Haftklebeverbund-Muster wurde eine vollflächig belichtete Druckplatte der Fa. DuPont Cyrel HOS mit den Abmessungen Länge 210 mm x Breite 120 mm x Dicke 2,54 mm derart auf die erfindungsgemäße Haftklebemasse verklebt, dass an jeder Kante 20 mm des darunter liegenden Haftklebeverbundes überstand (zentrierte Aufbringung auf dem Haftklebeverbund-Muster).

Die Aufbringung des Klischees geschah, indem eine der kürzeren Kanten des Klischees (Querkante) in einem Abstand von 20 mm zu einer der kürzeren Kanten des Haftklebeverbund-Musters parallel zu dieser Kante auf das Muster aufgebracht wurde. Dann wurde das Klischee von dieser Kante ausgehend mit einer Kunststoffrolle (Breite 100 mm, Durchmesser 30 mm, Shore-Härte A 45) angerollt. Die Anrollbewegung fand in Längsrichtung des Druckzylinders und lotrecht statt und wurde kontinuierlich von jeweils einer Längskante des Klischees zur gegenüberliegenden Längskante des Klischees und wieder zurück ausgeführt. Die Anrollgeschwindigkeit betrug dabei in Querrichtung 10 m/min. Der Druckzylinder rotierte gleichzeitig mit einer Oberflächengeschwindigkeit von 0,6 m/min, so dass mit der Kunststoffrolle relativ zum Druckklischee eine Zick-Zack Bewegung in Richtung auf die zweite Querkante des Klischees beschrieben wurde. Der Vorgang wurde beendet, nachdem das Klischee vollflächig angedrückt war. Als Messgröße diente die Anpresskraft der Kunststoffrolle, die mindestens erforderlich war, um das Klischee vollflächig auf dem Klebeverbund zu fixieren, ohne dass ein Kantenabheben festzustellen war.

Der Test wurde bei drei verschiedenen Temperaturen (15 °C, 25 °C, 35 °C) und jeweils bei einer relativen Luftfeuchtigkeit von 50 ± 5 % durchgeführt.

Bewertungsschema:

| erforderliche Anpresskraft | Bewertung |
| --- | --- |
| < 50 N | ++ |
| 50 N bis < 60 N | + |
| 60 N bis < 70 N | 0/+ |
| 70 N bis < 80 N | 0 |
| 80 N bis < 90 N | 0/- |
| 90 N bis < 100 N | - |
| 100 N und mehr | -- |

**Testmethode 2: Lösungsmittelbeständigkeit**

Die Montage der Prüfmuster erfolgte wie in der Testmethode 1 (Montageverhalten) angegeben mit der entsprechenden Anpresskraft, die erforderlich war, um das Klischee vollflächig und ohne Kantenabheben zu montieren. Der Druckzylinder wurde so ausgerichtet, dass sich beide kurzen Kanten des verklebten Klischees auf einer Höhe oberhalb der Drehachse des Zylinders befanden (offenliegender Bereich des Zylinders nach oben ausgerichtet).

Mit einer Pipette wurde ein Lösungsmittelgemisch (1/8 Ethylacetat / 1/8 n-Propanol / 6/8 Ethanol) 1 min lang auf beide Kanten appliziert, so dass die Kanten ständig unter Lösungsmitteleinfluss standen. Dabei wurde gerade soviel Lösungsmittel applizieren, dass beide Kanten dauerhaft mit Lösungsmittel benetzt waren (Testbedingungen: 25 °C, 50 ± 5 % relative Luftfeuchtigkeit).

Der Zylinder wurde nach Ablauf der Benetzungsdauer auf eine seiner Kanten gestellt, so dass überschüssiges Lösungsmittel ablaufen konnte.

Es wurde beobachtet, ob sich die kurzen Kanten des Klischees von dem Haftklebeverbund abgehoben hatten. Ein Maß für das Kantenabheben war dabei die 60 min nach Ablauf der Benetzungsdauer in Tangentialrichtung gemessene Länge L des nicht mehr verklebten Stücks der Druckplatte (des abgehobenen Druckplattenstücks), gemessen von dem freiliegenden Ende bis zu der ersten noch verklebten Stelle (vgl. Fig. 1: 1 = Druckplatte (Klischee), 2 = Haftklebeverbund, 3 = Druckzylinder, L = Länge des abgehobenen Druckplattenstücks).

Bewertungsschema:

| Kantenabheben nach Lösungsmitteleinfluss | Bewertung |
|---|---|
| <5mm | ++ |
| 5 bis < 10 mm | + |
| 10 bis < 15 mm | 0/+ |
| 15 bis < 20 mm | 0 |
| 20 bis < 25 mm | 0 / - |
| 25 bis < 30 mm | - |
| 30 mm und mehr | -- |

Mit den Klebeverbundproben wurde eine Messreihe durchgeführt, um das Montageverhalten bei verschiedenen Temperaturen sowie die Lösungsmittelbeständigkeit (Kantenabhebeverhalten unter Lösungsmitteleinfluss) in Abhängigkeit des Acrylsäureanteils zu ermitteln (Beispiele 1 bis 6; siehe Tabelle 1) sowie eine weitere Messreihe, mit der der Einfluss des Verhältnisses von linearem Acrylsäureester zu verzweigtem Acrylsäureester auf die genannten Eigenschaften getestet wurde (Beispiele 5 und 7 bis 14, siehe Tabelle 2). Für die Vergleichsproben (R1 und R2) wurden ebenfalls das Montageverhalten bei verschiedenen Temperaturen sowie die Lösungsmittelbeständigkeit untersucht (siehe Tabelle 3).

Tabelle 1: Einfluss des Acrylsäure- (AS-)Anteils bei konstantem Verhältnis 2-Ethylhexylacrylat (EHA) zu Butylacrylat (BA) (ca. 1 : 3)

| Beispiel | Gewichtsprozent AS : EHA : BA | Montage-verhalten (15 °C) (Test-methode 1) | Montage-verhalten (25 °C) (Test-methode 1) | Montage-verhalten (35 °C) (Test-methode 1) | Kantenabheben nach Lösungs-mitteleinfluss (Testmethode 2) |
|---|---|---|---|---|---|
| 1 | 5 : 24,8 : 70,2 | ++ | ++ | ++ | - |
| 2 | 7 : 24,3 : 68,7 | ++ | ++ | ++ | 0 |
| 3 | 9 : 23,8 : 67,2 | ++ | ++ | ++ | 0 / + |
| 4 | 11 : 23,3 : 65,7 0 / + | | ++ | ++ | + |
| 5 | 12 : 23 : 65 | 0 | ++ | ++ | ++ |
| 6 | 13 : 22,7 : 64,3 | - - | - | ++ | ++ |

Tabelle 2: Einfluss des Verhältnisses 2-Ethylhexylacrylat (EHA) zu Butylacrylat (BA) bei konstantem Masseanteil an Acrylsäure (AS) (12 Gew.-%)

| Beispiel | Gewichtsprozent AS : EHA : BA | Montage-verhalten (15 °C) (Test-methode 1) | Montage-verhalten (25 °C) (Test-methode 1) | Montage-verhalten (35 °C) (Test-methode 1) | Kantenabheben nach Lösungs-mitteleinfluss (Testmethode 2) |
|---|---|---|---|---|---|
| 7 | 12 : 88 : 0 | - - | 0 | ++ | ++ |
| 8 | 12 : 73 : 15 | - - | + | ++ | ++ |
| 9 | 12 : 59 : 29 | - | ++ | ++ | ++ |
| 10 | 12 : 43 : 45 | - | ++ | ++ | ++ |
| 11 | 12 : 28 : 60 | 0 | ++ | ++ | ++ |

(fortgesetzt)

| Beispiel | Gewichtsprozent AS : EHA : BA | Montage-verhalten (15 °C) (Test-methode 1) | Montage-verhalten (25 °C) (Test-methode 1) | Montage-verhalten (35 °C) (Test-methode 1) | Kantenabheben nach Lösungs-mitteleinfluss (Testmethode 2) |
|---|---|---|---|---|---|
| 5 | 12 : 23 : 65 | 0 | ++ | ++ | ++ |
| 12 | 12 : 18 : 70 | - | ++ | ++ | ++ |
| 13 | 12 : 8 : 80 | - | + | ++ | ++ |
| 14 | 12 : 0 : 88 | - - | 0 | ++ | ++ |

Tabelle 3: Ergebnis der Untersuchungen der Vergleichsproben

| Beispiel | | Montage-verhalten (15 °C) (Test-methode 1) | Montage-verhalten (25 °C) (Test-methode 1) | Montage-verhalten (35 °C) (Test-methode 1) | Kantenabheben nach Lösungs-mitteleinfluss (Testmethode 2) |
|---|---|---|---|---|---|
| R 1 | | + | ++ | ++ | - - |
| R 2 | | 0 / + | ++ | ++ | - - |

Als besonders vorteilhaft hat sich eine Haftklebemasse herausgestellt, die durch eine Basispolymer gegeben wird, welches auf 12 Gew.-% Acrylsäure und auf Butylacrylat und 2-Ethylhexylacrylat zurückzuführen ist, wobei 2-Ethylhexylacrylat und Butylacrylat im Verhältnis von 1 : 2 bis 1 : 3 vorliegt.

Es hat sich weiterhin gezeigt, dass sowohl die Vergleichshaftklebemasse R1, die auf Synthesekautschuk basiert, als auch die Vergleichsmasse R2, die nur einen Acrylsäureanteil von 2 Gew.-% aufweist, eine inakzeptable Lösungsmittelbeständigkeit aufweisen.

**Patentansprüche**

1. Verwendung einer vernetzten Haftklebemasse zum Verkleben flexibler Druckplatten auf gekrümmten Oberflächen, wobei die Haftklebemasse zumindest eine Basispolymerkomponente umfasst, erhältlich durch radikalische Copolymerisation folgender Monomere:

   a) lineare Acrylsäureester mit 2 bis 10 C-Atomen im Alkylrest,
   b) verzweigte nichtzyklische Acrylsäureester mit einer Glasübergangstemperatur $T_G$ (bezogen auf die DSC-Messung nach DIN 53765) von nicht mehr als -20°C,
   c) 8 bis 15 Gew.-% Acrylsäure,
   d) gegebenenfalls bis zu 10 Gew.-% weiterer copolymerisierbarer Monomere, wobei das Verhältnis der linearen Acrylsäureester zu den verzweigten Acrylsäureestern im Bereich von 1 : 6 bis 10 : 1 Masseanteilen liegt.

2. Verwendung nach Anspruch 1, **dadurch gekennzeichnet, dass** die Basispolymerkomponente bzw. die Basispolymerkomponenten mindestens 90 Gew.-%, bevorzugt mindestens 95 Gew.-%, besonders bevorzugt mindestens 98 Gew.-% der Haftklebemasse ausmachen.

3. Verwendung nach Anspruch 1. oder 2, **dadurch gekennzeichnet, dass** der Acrylsäureanteil im Bereich von 8 bis 12,5, insbesondere von 11 bis 12 Gew.-%, bezogen auf die Gesamtmenge zu copolymerisierender Monomere, liegt.

4. Verwendung nach einem der Ansprüche 1 bis 3, **dadurch gekennzeichnet, dass** der Acrylsäureanteil im Bereich von 12,5 bis 13,5, insbesondere von 13 Gew.-%, bezogen auf die Gesamtmenge zu copolymerisierender Monomere, liegt.

5. Verwendung nach einem der Ansprüche 1 bis 4, **dadurch gekennzeichnet, dass** das Verhältnis der linearen Acrylsäureester zu den verzweigten Acrylsäureestern im Bereich von 1 : 5 bis 9 : 1, insbesondere im Bereich von 1 : 2 bis 4 : 1 Masseanteilen liegt.

**6.** Verwendung nach einem der Ansprüche 1 bis 5, **dadurch gekennzeichnet, dass** das Verhältnis der linearen Acrylsäureester zu den verzweigten Acrylsäureestern im Bereich von 1,5 : 1 bis 3,5 : 1, insbesondere im Bereich von 2 : 1 bis 3 : 1 Masseanteilen liegt.

**7.** Verwendung nach einem der vorangehenden Ansprüche 1 bis 6, **dadurch gekennzeichnet, dass** als linearer Acrylsäureester Butylacrylat und als verzweigter Acrylsäureester 2-Ethylhexylacrylat eingesetzt wird.

**8.** Verwendung nach einem_der_Ansprüche 1 bis 7, wobei die Haftklebemasse eine Basispolymerkomponente umfasst, erhältlich durch radikalische Copolymerisation ausschließlich folgender Monomere:

   a) n-Butylacrylat,
   b) 2-Ethylhexylacrylat und
   c) 11 bis 15 Gew.-% Acrylsäure,

wobei das Verhältnis von n-Butylacrylat zu 2-Ethylhexylacrylat im Bereich von 1 : 6 bis 10 : 1 Masseanteilen liegt.

**Claims**

**1.** Use of a crosslinked pressure-sensitive adhesive for bonding flexible printing plates to curved surfaces, the pressure-sensitive adhesive comprising at least one base polymer component obtainable by free-radical copolymerization of the following monomers:

   a) linear acrylic esters having 2 to 10 C atoms in the alkyl radical,
   b) branched, non-cyclic acrylic esters having a glass transition temperature $T_G$ (based on the DSC measurement to DIN 53765) of not more than -20°C,
   c) 8% to 15% by weight of acrylic acid,
   d) optionally up to 10% by weight of further copolymerizable monomers, where the ratio of the linear acrylic esters to the branched acrylic esters is in the range from 1 : 6 to 10 : 1 mass fractions.

**2.** Use according to Claim 1, **characterized in that** the base polymer component or base polymer components make up at least 90%, preferably at least 95%, more preferably at least 98% by weight of the pressure-sensitive adhesive.

**3.** Use according to Claim 1 or 2, **characterized in that** the acrylic acid fraction is in the range from 8% to 12.5%, more particularly from 11% to 12% by weight, based on the total amount of monomers to be copolymerized.

**4.** Use according to any of Claims 1 to 3, **characterized in that** the acrylic acid fraction is in the range from 12.5% to 13.5%, more particularly of 13% by weight, based on the total amount of monomers to be copolymerized.

**5.** Use according to any of Claims 1 to 4, **characterized in that** the ratio of the linear acrylic esters to the branched acrylic esters is in the range from 1 : 5 to 9 : 1, more particularly in the range from 1 : 2 to 4 : 1 mass fractions.

**6.** Use according to any of Claims 1 to 5, **characterized in that** the ratio of the linear acrylic esters to the branched acrylic esters is in the range from 1.5 : 1 to 3.5 : 1, more particularly in the range from 2 : 1 to 3 : 1 mass fractions.

**7.** Use according to any of preceding Claims 1 to 6, **characterized in that** butyl acrylate is used as linear acrylic ester and 2-ethylhexyl acrylate is used as branched acrylic ester.

**8.** Use according to any of Claims 1 to 7, where the pressure-sensitive adhesive comprises a base polymer component obtainable by free-radical copolymerization of exclusively the following monomers:

   a) n-butyl acrylate,
   b) 2-ethylhexyl acrylate and
   c) 11% to 15% by weight of acrylic acid,

where the ratio of n-butyl acrylate to 2-ethylhexyl acrylate is in the range from 1 : 6 to 10 : 1 mass fractions.

**Revendications**

1. Utilisation d'une masse autoadhésive réticulée pour le collage de plaques d'impression souples sur des surfaces courbes, la masse autoadhésive comprenant au moins un composant polymère de base, pouvant être obtenu par copolymérisation radicalaire des monomères suivants :

 a) esters linéaires de l'acide acrylique comprenant 2 à 10 atomes de C dans le radical alkyle,
 b) esters ramifiés non cycliques de l'acide acrylique, présentant une température de transition vitreuse $T_G$ (par rapport à la mesure par DSC selon la norme DIN 53765) non supérieure à - 20°C,
 c) 8 à 15 % en poids d'acide acrylique,
 d) le cas échéant jusqu'à 10 % en poids d'autres monomères copolymérisables,

 le rapport des esters linéaires de l'acide acrylique sur les esters ramifiés de l'acide acrylique se situant dans la plage de 1 : 6 à 10 : 1 parties en masse.

2. Utilisation selon la revendication 1, **caractérisée en ce que** le composant polymère de base ou les composants polymères de base représentent au moins 90 % en poids, de préférence au moins 95 % en poids, de manière particulièrement préférée au moins 98 % en poids de la masse autoadhésive.

3. Utilisation selon la revendication 1 ou 2, **caractérisée en ce que** la proportion d'acide acrylique se situe dans la plage de 8 à 12,5, en particulier de 11 à 12 % en poids, par rapport à la quantité totale des monomères à copolymériser.

4. Utilisation selon l'une quelconque des revendications 1 à 3, **caractérisée en ce que** la proportion d'acide acrylique se situe dans la plage de 12,5 à 13,5, en particulier à 13 % en poids, par rapport à la quantité totale des monomères à copolymériser.

5. Utilisation selon l'une quelconque des revendications 1 à 4, **caractérisée en ce que** le rapport des esters linéaires de l'acide acrylique sur les esters ramifiés de l'acide acrylique se situe dans la plage de 1 : 5 à 9 : 1, en particulier dans la plage de 1 : 2 à 4 : 1 parties en masse.

6. Utilisation selon l'une quelconque des revendications 1 à 5, **caractérisée en ce que** le rapport des esters linéaires de l'acide acrylique sur les esters ramifiés de l'acide acrylique se situe dans la plage de 1,5 : 1 à 3,5 : 1, en particulier dans la plage de 2 : 1 à 3 : 1 parties en masse.

7. Utilisation selon l'une quelconque des revendications 1 à 6, **caractérisée en ce qu'**on utilise, comme ester linéaire de l'acide acrylique, l'acrylate de butyle et, comme ester ramifié de l'acide acrylique, l'acrylate de 2-éthylhexyle.

8. Utilisation selon l'une quelconque des revendications 1 à 7, la masse autoadhésive comprenant un composant polymère de base, pouvant être obtenu par copolymérisation radicalaire d'exclusivement les monomères suivants :

 a) acrylate de n-butyle,
 b) acrylate de 2-éthylhexyle et
 c) 11 à 15 % en poids d'acide acrylique,

 le rapport d'acrylate de n-butyle sur acrylate de 2-éthylhexyle se situant dans la plage de 1 : 6 à 10 : 1 parties en masse.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 760389 A
- WO 03057497 A
- WO 2004067661 A
- EP 2116584 A1
- WO 2010028976 A
- US 623011 A
- JP 2004268447 A
- JP 2005232330 A

**In der Beschreibung aufgeführte Nicht-Patentliteratur**

- **T.G. FOX.** *Bull. Am. Phys. Soc.,* 1956, vol. 1, 123